Europäisches Patentamt

European Patent Office

Office européen des brevets

(11) Publication number: **0 282 681**
**A1**

## EUROPEAN PATENT APPLICATION

(21) Application number: 87830108.4

(51) Int. Cl.4: **H02K 44/08** , H02K 44/00

(22) Date of filing: 20.03.87

(43) Date of publication of application:
21.09.88 Bulletin 88/38

(84) Designated Contracting States:
**DE FR GB IT NL**

(71) Applicant: **ANSALDO SOCIETA per AZIONI**
**Plazza Carignano 2**
**Genoa(IT)**

(72) Inventor: **Avanzini, Pier Giulio, Dr. Ing.**
**Via A. Volta 27**
**I-16128 Genoa(IT)**

(74) Representative: **Galletti di San Cataldo, Vettor,**
**Dr.**
**Via XX Settembre 36**
**I-16121 Genova(IT)**

(54) Two-phase gas-liquid metal magnatohydrodynamic system with expander and compressor integrated in a superconducting magnet, for the production of electric power.

(57) A two-phase fluid gas-liquid metal mag-netohydrodynamic system which includes an ex-pander (b) and a compressor (f), both passed through by the two-phase mixture and subjected to the induction field of a single magnet and connected electrically in series.

FIG.6

# Two-phase gas-liquid metal magnetohydrodynamic system with expander and compressor integrated in a superconducting magnet, for the production of electric power.

The subject-matter of this invention consists of a magnetohydrodynamic system (commonly known as MHD system), using a two-phase gas-liquid metal fluid, for the production of electric power, and equipped with an expander and compressor integrated in a superconducting magnet.

The conversion of thermal energy into electric power by means of MHD systems is based on the interaction between a magnetic field and a conducting fluid, moving in a direction perpendicular to the magnetic field itself, in a duct which, in most cases, takes the shape of a straight channel. This interaction gives rise, through the law of electromagnetic induction, to an electric field having a direction perpendicular to the plane identified by the speed and by the magnetic field; an electromotive force is associated with this electric field, and may be collected by electrodes located on the walls of the channel, perpendicular to the electric field; if these electrodes are connected to an external circuit there is circulation of current.

The fluid in which the MHD conversion takes place may be plasma (that is to say gas at a high temperature, in which the conductivity is increased by injection of ionizing salts), or a two-phase fluid consisting of a mixture of liquid metal and vapor or liquid metal and gas.

Plasma MHD systems may be of the open or closed cycle type, operating in a high temperature range (3000-2400° K for the open cycle and about 2000-1400° K for the closed cycle), and as a rule they are connected upstream from a conventional steam or gas powered plant, together with which they form a whole plant able to achieve very high overall performances of 48% and over.

Since at temperatures lower than 1000°K their operating fluids have a conductivity greater by several orders of size than that of a plasma, even ionized, liquid metal MHD (LMMHD) systems may be fed by sources of heat at lower temperatures (1500-800°K) and therefore appear to be suitable for feeding by various kinds of sources which may be either of a conventional type (fossil fuels), or nuclear, solar or low enthalpy.

In these systems the gas, expanding, supplies motion to the metal with which it has been mixed and which therefore generates electric power; during the compression stage the gas and the metal run through separate circuits.

LMMHD energy conversion systems may be classified according to the following table :

Gravitational LMMHD :- Brayton
- Rankine

Non-gravitational LMMHD :- Binary
- Brayton
- Rankine
- Homogenous.

The main characteristics of the invention are summarized and schematically illustrated in the claims. Its aims and advantages are also shown in the following drawings, in which :

- figure 1 is a diagram showing an Omacon-Brayton cycle with a turbocompressor;
- figure 2 is a diagram showing an Omacon-Brayton with some changes as compared to the previous figure;
- figure 3 is a diagram of an Omacon-Rankine cycle;
- figure 4 is a diagram of a Brayton cycle with a generator of the MHD type defined above, two-phase with turbocompressor;
- figure 5 is the flow chart of a system for the production of electric power, fed by a liquid metal fast nuclear reactor;

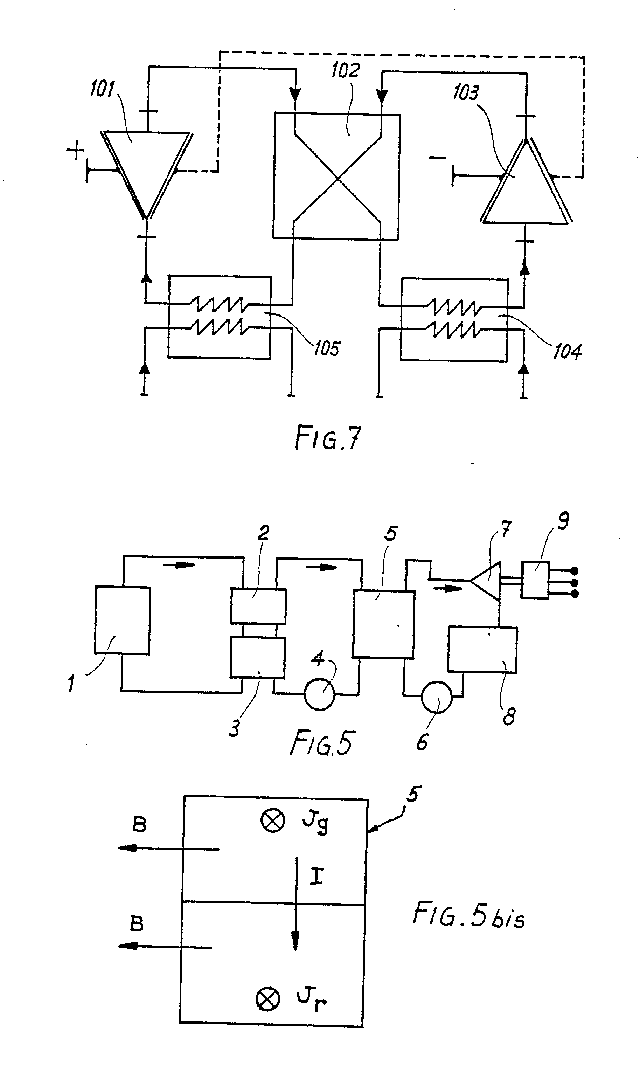

- figure 5/bis shows a schematic cross-section of the so-called flow coupler of the last figure;

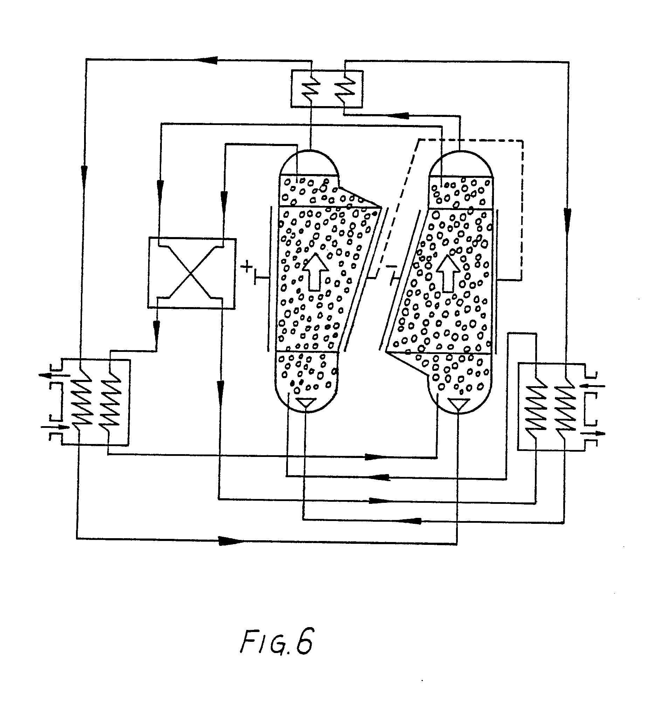

- figure 6 is a diagram of the system according to the invention;
- figure 7 shows a different plant engineering solution applied to the same invention.

The main conversion cycles are described below:

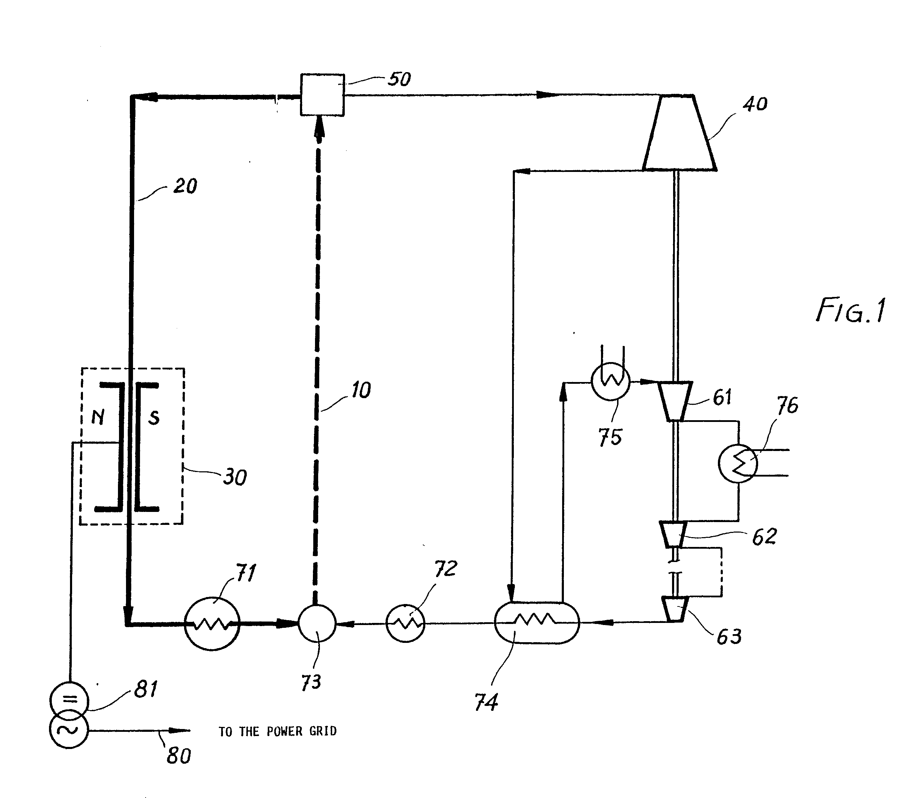

Omacon-Brayton cycle with turbocompressor (fig. 1) :

The operational fluid consists for its liquid part of a high-density lead alloy and for its gaseous part of an inert gas (helium, argon or a mixture of both).

As shown in the drawing, the circuit is practically split into two parts, one where the liquid metal circulates and the other where the gas circulates, joined together by the "riser" branch (10), where the mixture circulates; circulation takes place due to the difference in density existing between the mixture and the liquid metal in the "riser" (10) and "lowering" (20) branches, where the MHD generator is located (30). For the gas part, the circuit is completed by a gas turbine (40), driven by gas coming from the signaller (50) still possessing usable enthalpy, by compressors (61, 62, 63), recuperating exchangers and by the exchangers of the hot or of the cold sources.

(71) indicates a heat exchanger for heating the liquid metal; (72) indicates a heat exchanger for heating the gas.

This second heat exchanger is optional.

(73) is a mixer for mixing the gas and liquid metal.

(74) indicates a regenerating exchanger.

(75) is a cold source and (76) is an exchanger for intermediate cooling of the gas between two contiguous compression stages.

Finally, (80) indicates the grid fed by the MHD type generator (30), through a converter (81).

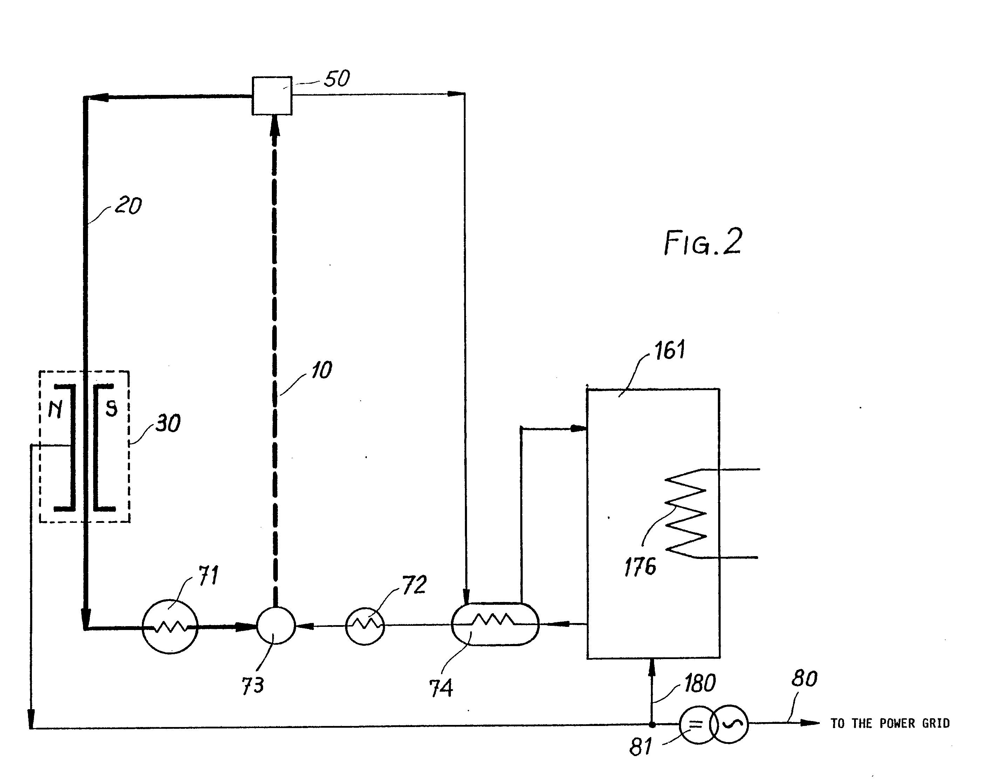

Figure 2 shows an Omacom-Brayton cycle.

The components already present in the system illustrated in figure 1 above bear the same reference numbers.

This circuit differs from the one previously described in its lack of a gas turbine and in the presence of a special type of compressor (161) developed by the BEN GURION University, cooled by the exchanger (176) and fed by an off-take from the generator (30) through line (180).

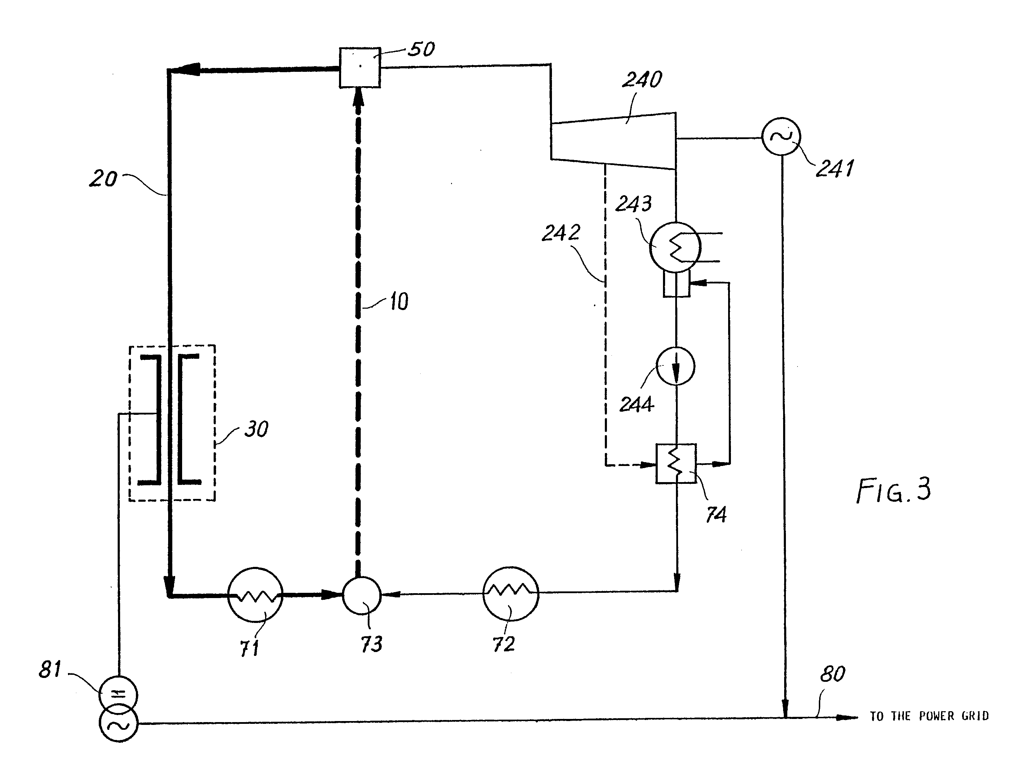

Figure 3 shows an Omacon-Rankine cycle.

Again in this figure the components already present in the last two figures are indicated by the same reference numbers.

In this solution the mixture consists of liquid metal and vapor rather than liquid metal and gas. The vapor feeds a turbine (240) which moves an alternator (241) and which is equipped with a bleeder (242) used to preheat the feedwater coming from the condenser (243) and pumped by the pump (244).

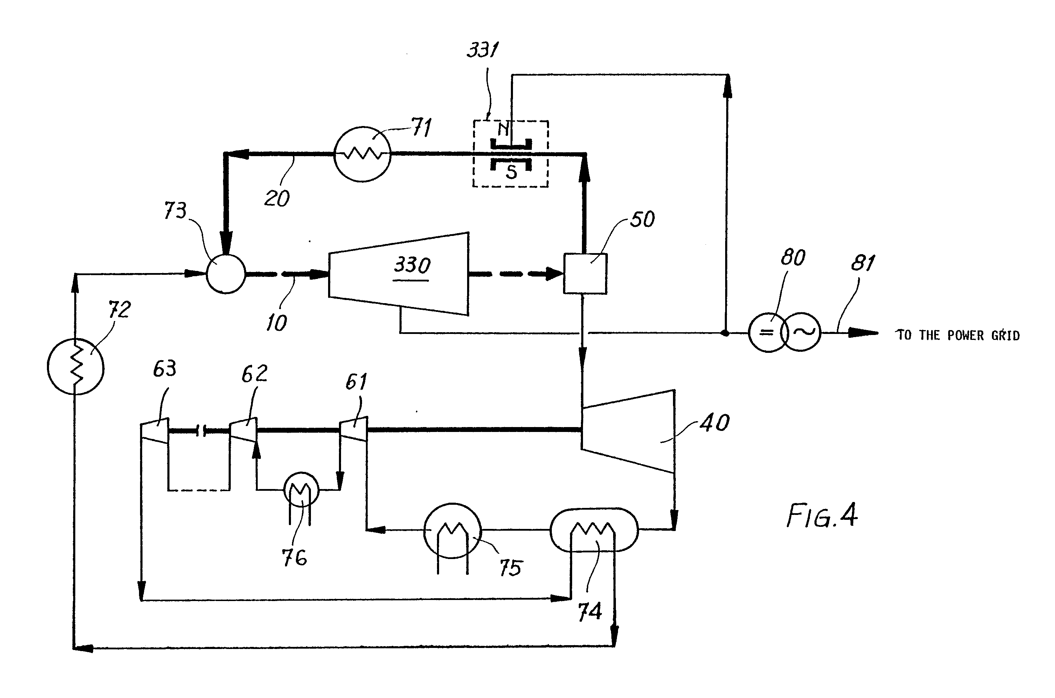

Figure 4 shows the Brayton cycle with a two-phase MHD type generator and a turbocompressor.

Again in this case, the components already present in the previous solutions keep the same reference numbers. The main feature of this cycle is the presence of an MHD generator (330) working with a two-phase mixture : the liquid phase is moved by the expansion of the aeriform phase and produces electric power, part of which drives the MHD pump (331).

The circuit does not otherwise differ greatly from the Omacon-Brayton cycle with the turbocompressor.

A system of particular interest for the evaluation of this invention is the "flow-coupler" shown in figures 5 and 5/bis, and which is a device exploiting hydrodynamic energy to generate electric power which feeds an electromagnetic pump.

Figure 5 is the flow chart of a system for the production of electric power fed by a liquid metal fast nuclear reactor (1) : the mechanical pump (4) makes the secondary sodium circulate in the intermediate ex changer (2) and in the flow coupler (3), formed by two identical channels subjected to the same magnetic field B, passed through by sodium at speeds $V_g$ and $V_p$ in the same direction. Circulation of the sodium in the generator channel gives rise to the production of current, which feeds the pump channel, which in turn makes the primary sodium circulate in the reactor and in the circuit connected to same.

The circuit is completed by the following components : (5) vapor generator, (6) water pump, (7) turbine, (8) condenser, (9) electric generator.

The system described below serves only to transform hydrodynamic energy into hydrodynamic energy, passing through electric power.

The liquid metal magnetohydrodynamic (LMMHD) system forming the subject-matter of this invention consists, as shown in the flow of the system illustrated in fig. 6, of a two-phase mixture expander (b) and compressor (f), connected electrically to one another : the mechanical energy produced by the expander (b) is converted in it to electric power, part of which feeds the compressor-pump (f) while the remaining quantity is the usable electric power. The gas and the liquid metal are mixed together only in the compressor (f) and in the expander (b); in the rest of the circuit they follow separate paths, thanks to the separation and mixing carried out by the appropriate devices (c, d, i, g) located at the inlets and outlets of the generator (b) and of the compressor (f) and pass through the recuperating heat exchangers (l, h) and those connected to the <u>high temperature</u> (e) and <u>low temperature</u> (a) sources.

As can be seen in the flow chart of figure 6, the two components of the system where the operational fluid (or more precisely the gas) exchanges work with the outside (of which the liquid metal may be considered part), that is to say the expander (b) and the compressor (f), form an integrated whole, since both are passed through by a two-phase mixture, subjected to a magnetic induction field produced by a single magnet, proposed as a superconducting magnet.

The system proposed by the invention differs therefore from the known systems considered up to now by the integration in a single component of the expander and compressor (b, f), by the presence of a two-phase mixture pump-compressor (f), thanks to which any rotating machinery in the circuit is eliminated, and the circuit becomes extremely compact.

A different plant engineering solution is shown in figure 7, where the two-phase mixture evolves along the whole circuit, without being recomposed and separated at the expander and compressor inlets and outlets; this solution may be used for space applications, in which the absence of gravity permits an even more simplified version than the above due to the absence, in addition to the rotating compressor as already mentioned, also of the mixer and separator inside the expander and compressor : it is instead sufficient to form the mixture before the plant is started up.

In fig. 7 the various components are indicated by the following reference numbers :
101 magnetohydrodynamic generator;
102 regenerating heat exchanger;
103 magnetohydrodynamic pump;
104 heat exchanger (cold source);
105 heat exchanger (hot source).

As compared to similar systems, the system for which a patent is requested has the following advantages :

a. A simple and compact structure, due to the absence of rotating machinery and the use of one single magnet. This feature is particularly important for aerospace applications.

b. Almost isothermal expanding and compressing transformations due to the exchange of heat between the liquid metal and the gas during expansion and vice versa during compression, which take place with no appreciable temperature variations because of the considerable difference in the thermal capacities of the two fluids. This property allows the cycle to achieve thermodynamic performances very close to those of the Carnot cycle, thanks to the regeneration which it is possible to effect.

c. Use of a superconducting magnet :recourse to other magnetic fields (4-6 T) makes further and significant improvements in the performance of the system possible.

d. Operational flexibility.Thanks to the possibility of adjusting the regenerating heat effect on which the performance and the electric power produced by the system depend, it is possible to optimize one of these two parameters according to the application or the operating conditions.

Although for descriptive reasons this invention is based on the above description and drawings, many alterations and variations may be brought about in the embodiment of the invention. These alterations and variations shall however be deemed to be based on the claims listed below :

## Claims

1) Two phase fluid gas-liquid metal magnetohydrodynamic system characterized in that it includes an expander (b) and a compressor (f), both passed through by a two-phase mixture, subjected to the induction field of a single magnet and connected electrically in series.

2) Two phase fluid gas-liquid metal magnetohydrodynamic system according to claim 1, characterized in that the inlet of the expander (b) and the input of the compressor (f) are fitted with means for measuring the gas and the liquid metal, and, correspondingly, the outlet from the expander (b) and the outlet of the compressor (f) are equipped with means for separating the two fluids so that these, outside the expander and the compressor, circulate in separate ducts.

3) Magnetohydrodynamic system according to claim 2, characterized in that the gas coming out of the compressor (f) undergoes a first heating at the expense of the heat of the gas leaving the expander (b) in a recuperating exchanger (h) and then a second heating in the exchanger (e) which constitutes the source of heat; in which, vice versa, this gas, on leaving the expander (b) undergoes a first cooling in favour of the gas leaving the compressor (f) in the recuperating exchanger (h) and then a second cooling in the exchanger (a) which constitutes the cold source.

4) Magnetohydrodynamic system according to claim 2, characterized in that the liquid metal leaving the compressor (f) undergoes a first heating at the expense of the heat of the liquid metal leaving the expander (b) in a recuperating exchanger (l) and then a second heating in the exchanger (e) which constitutes the source of heat; in which, vice versa, this liquid metal on leaving the expander (b) undergoes a first cooling in favour of the liquid metal leaving the compressor (f) in the recuperating exchanger (l) and then a second cooling in the exchanger (a) which constitutes the cold source.

5) Magnetohydrodynamic system according to claim 1, characterized in that, according to a preferred embodiment particularly advantageous when the system must operate in the absence of gravity, the fluids remain mixed also in the circuits external to the expander (101) and to the compressor (103); in which the mixture leaving the compressor (103) undergoes a first heating at the expense of the heat of the mixture leaving the expander (101) in a recuperating exchanger (102) and then a second heating in the ex changer (105) which constitutes the source of heat; in which, vice versa, the gas and liquid metal mixture leaving the expander (101) undergoes a first cooling in favour of the liquid metal leaving the compressor (103) in the recuperating exchanger (102) and then a second cooling in the exchanger (104) which constitutes the cold source.

6) Magnetohydrodynamic system according to one or more of the above claims, implemented and set up substantially according to the above descriptions and illustrations.

*Fig.1*

TO THE POWER GRID

FIG.2

N   S

TO THE POWER GRID

0 282 681

FIG. 3

TO THE POWER GRID

0 282 681

FIG.4

331

71

20

73

330

10

50

72

80

81

TO THE POWER GRID

63    62    61

76

75

40

74

0 282 681

FIG.7

FIG.5

FIG.5 bis

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 517 229 (BIDARD) * Column 3, lines 25-36; column 5, lines 43-46; column 5, line 58 - column 8, line 69; column 9, lines 45-60; figures 3N,3M,3P,4 * | 1,6 | H 02 K 44/08 H 02 K 44/00 |
| | --- | | |
| Y | US-A-3 432 694 (BIDARD) * Column 1, lines 13-23; column 2, lines 19-27; column 3, lines 29-35; column 5, line 18 - column 6, line 14; figures 8,9 * | 1-6 | |
| | --- | | |
| Y | US-A-3 450 904 (BIDARD) * Column 3, lines 6-55; figure 1 * | 1-6 | |
| | --- | | |
| A | EP-A-0 097 349 (WESTINGHOUSE) * Page 6, lines 1-25; figures 1,2 * | 1 | TECHNICAL FIELDS SEARCHED (Int. Cl.4) |
| | ----- | | H 02 K |

The present search report has been drawn up for all claims

| Place of search THE HAGUE | Date of completion of the search 10-11-1987 | Examiner TIO K.H. |
|---|---|---|